Europäisches Patentamt

European Patent Office

Office européen des brevets

(19)

(11) Veröffentlichungsnummer: **0 281 685 B1**

(12) **EUROPÄISCHE PATENTSCHRIFT**

(45) Veröffentlichungstag der Patentschrift: 27.02.91

(51) Int. Cl.⁵: **F16L  27/10**

(21) Anmeldenummer: **87119030.2**

(22) Anmeldetag: **22.12.87**

(54) **Als Kompensator wirkender, rohrförmiger Faltenbalg.**

(30) Priorität: **26.02.87 CH 734/87**

(43) Veröffentlichungstag der Anmeldung:
**14.09.88 Patentblatt  88/37**

(45) Bekanntmachung des Hinweises auf die
Patenterteilung:
**27.02.91 Patentblatt  91/09**

(84) Benannte Vertragsstaaten:
**BE DE FR GB NL SE**

(56) Entgegenhaltungen:
**FR-A- 1 548 728**
**FR-A- 2 302 003**

(73) Patentinhaber: **GEBRÜDER SULZER AKTIENGE-
SELLSCHAFT
Zürcherstrasse 9
CH-8401 Winterthur(CH)**

(72) Erfinder: **Ramseyer, Fritz
Rosenweg 3
CH-8353 Elgg(CH)**

(74) Vertreter: **Sparing Röhl Henseler Patentanwälte European Patent Attorneys
Rethelstrasse 123
D-4000 Düsseldorf 1(DE)**

## Beschreibung

Die Erfindung betrifft einen Faltenbalg mit den Merkmalen des Oberbegriffs des Anspruchs 1.

Ein solcher Faltenbalg ist aus der FR-PS 1 548 728 bekannt. Bei ihm besteht die innere gasdichte Schicht aus Kunststoff, wogegen die äussere Schicht ein Schlauch aus Metalldrahtgewebe oder -geflecht ist. Der Schlauch hat die Aufgabe, zusammen mit von aussen in die Falten gelegten, beide Schichten umfassenden Ringen den im Faltenbalg herrschenden Innendruck aufzunehmen, dem die Kunststoffwand allein nicht widerstehen könnte. Das Anwendungsgebiet des bekannten Faltenbalges ist auf Fälle beschränkt, in denen das im Faltenbalg befindliche Medium relativ niedrige Temperatur hat.

Für höhere Mediumtemperaturen ist aus dem FR-GM 2 302 003 ein einwandiger Faltenbalg aus Metall bekannt. Zur mechanischen Verstärkung des Faltenbalges gegen Innendruck sind in die Falten von aussen Ringe eingelegt, die im Querschnitt halbkreisförmig sind und jeweils ein gegen aussen offenes U bilden. Bei einem Auftreten von Schwingungen oder Vibrationen haben diese Verstärkungsringe keine dämpfende Wirkung.

Der Erfindung liegt die Aufgabe zugrunde, einen Faltenbalg der eingangs genannten Art, der unter sehr strengen Arbeitsbedingungen eingesetzt werden kann, d.h. dass er ausser gegen hohe Temperaturen und/oder Druckdifferenzen auch gegen Schwingungen widerstandsfähig ist.

Diese Aufgabe wird erfindungsgemäss durch die Merkmale des Kennzeichens des Anspruchs 1 gelöst.

Die Durchbrechungen aufweisende äussere Blechwand bewirkt eine erhebliche Verstärkung der inneren gasdichten Blechwand, ohne ein frühzeitiges Erkennen von Rissen oder Leckagen der inneren Blechwand allzusehr zu beeinträchtigen. Ausserdem weist der erfindungsgemässe Faltenbalg wegen der Durchbrechungen aufweisenden Blechwand gute Dämpfungseigenschaften gegen Schwingungen auf. Ein weiterer Vorteil des neuen Faltenbalges besteht darin, dass - wenn er aussen von Vakuum umgeben ist - wegen der Durchbrechungen die Luft zwischen den beiden Blechwänden beim Herstellen des Vakuums schneller entweichen kann, als bei geschlossener äusserer Blechwand.

Die Ansprüche 2 bis 4 kennzeichnen einige bevorzugte Ausführungsformen des erfindungsgemässen Faltenbalgs.

Zwei Ausführungsbeispiele der Erfindung werden in der folgenden Beschreibung anhand der Zeichnung näher erläutert. Es zeigen:

Fig. 1    eine Seitenansicht eines erfindungsgemässen Faltenbalgs,

Fig. 2    im Schnitt und im vergrösserten Massstab ein Detail A des Faltenbalgs aus Fig. 1 und

Fig. 3    einen der Fig. 2 ähnlichen Schnitt eines Details eines abgewandelten Faltenbalgs.

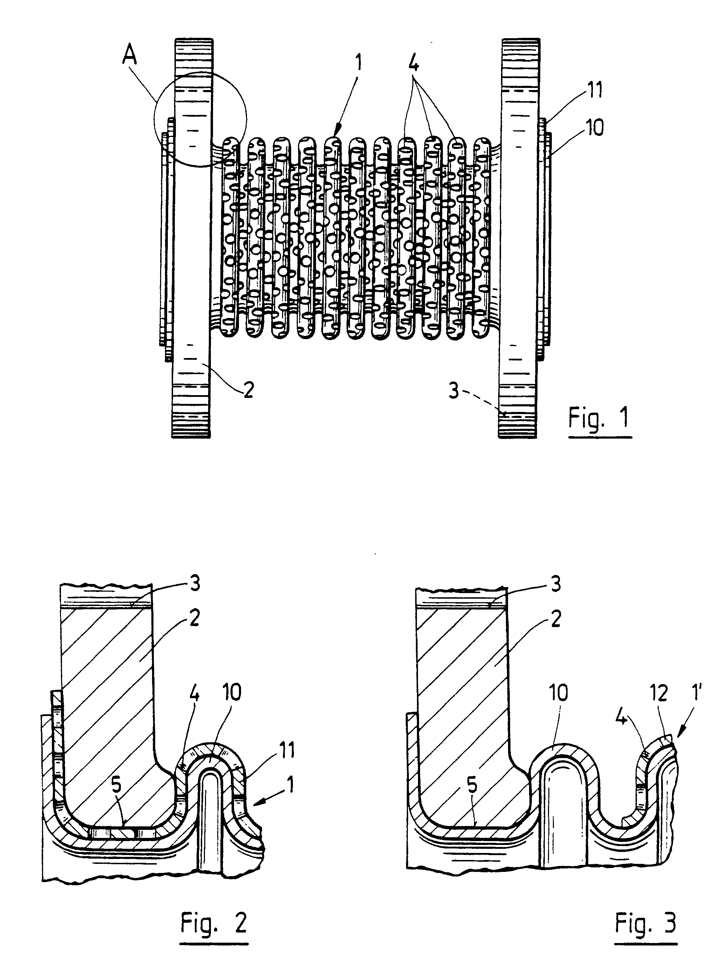

Gemäss Fig. 1 weist ein wellrohrförmiger Faltenbalg 1 einen kreisförmigen Querschnitt auf und an den beiden Enden ist je ein Flansch 2 befestigt. Die Flansche 2 weisen in ihrem Umfangsbereich mehrere gleichmässig verteilte, durchgehende axiale Bohrungen 3 auf, durch die nicht gezeigte Schrauben gesteckt werden können, um die Flansche mit entsprechenden Flanschen von benachbarten Teilen, beispielsweise Rohrleitungen, zu verbinden.

Der Faltenbalg 1 weist zwei Wände auf, eine innere, gasdichte Wand 10 und eine äussere, mit kreisförmigen Durchbrechungen 4 versehene Wand 11 (Fig. 2). Beide Wände 10, 11 bestehen aus einem gleichen, elastischen Metall, z.B. einem korrosionsbeständigen Stahl, und sind an ihren Enden plastisch so verformt, dass sie den inneren Rand der Flansche 2 fest umfassen, und zwar die zentrale Bohrung 5 der Flansche sowie einen Teil der beiden Stirnflächen jedes Flansches. Auf diese Weise besteht eine einwandfreie, dauerhafte Verbindung zwischen den Wänden 10, 11 und den Flanschen 2.

Der Faltenbalg 1' nach Fig. 3 unterscheidet sich von dem nach Fig. 1 und 2 dadurch, dass seine äussere Wand 12 kürzer als die innere Wand 10 ist. Hier umfassen also nur die Enden der inneren Wand 10 die Flansche 2. Diese Variante ist dann zweckmässig, wenn die Festigkeit der inneren Wand 10 für die auftretenden Beanspruchungen ausreicht und lediglich eine zusätzliche Dämpfung gegen Schwingungen notwendig ist. Unter Umständen genügt es, wenn die Länge der äusseren Wand 12 nur etwa ein Drittel der Länge der inneren Wand 10 beträgt. Vorzugsweise wird die äussere Wand 12 symmetrisch zwischen den Flanschen 2 angeordnet.

Jeder der Faltenbälge 1, 1' verbindet also gegen aussen abgedichtete Räume innerhalb zweier benachbarter, nicht dargestellter Teile miteinander und wirkt dabei als Kompensator, um Wärmedehnungen und andere kleine Verschiebungen dieser Teile gegeneinander auszugleichen. Bei jedem Faltenbalg 1, 1' erfüllt die innere Wand 10 die Abdichtfunktion und mindestens teilweise die festigkeitsmässigen Aufgaben des Faltbalges 1, 1', wobei die äussere Wand 11 bzw. 12 schwingungsdämpfend wirkt und auch die Festigkeit der inneren Wand 10 unterstützt. Die Durchbrechungen 4 in der äusseren Wand 11, 12 ermöglichen sowohl eine visuelle Erfassung des Zustandes der inneren Wand 10 als auch eine rasche, ungehinderte Feststellung von Leckagen. Diese Kontrollen sind umso besser, je grösser der Durchmesser der Durchbrechungen 4 ist, wobei wünschenswert ist, diesen Durchmesser mindestens zweimal so gross wie die Dicke der Wand 11 oder 12 zu bemessen.

Anstelle von runden Durchbrechungen 4 sind auch andere Umrissformen möglich, nämlich z.B. ein recht- oder sechseckiger Umriss. Hierdurch werden besonders grosse offene Flächen geschaffen.

In den beiden Ausführungsbeispielen wird jeweils lediglich eine durchbrochene Wand 11 bzw. 12 gezeigt, die gleich dick ist wie die gasdichte Wand 10 und diese aussen umgibt. Es ist aber auch möglich, die gasdichte Wand um die durchbrochene herum anzuordnen, etwa dann, wenn Leckagen mittels Messungen im Innern der über den Faltenbalg 1 bzw. 1' miteinander verbundenen Räume festgestellt werden sollen. Es können aus Festigkeitsgründen auch mehr als eine durchbrochene Wand vorgesehen werden. Es ist auch möglich, die Wände verschieden dick auszulegen, je nach Materialwahl und den zu erwartenden Beanspruchungen.

Der Faltenbalg kann auch einen drei-, vier- oder sechseckigen Querschnitt haben.

Die Verbindung des Faltenbalges mit den benachbarten Teilen könnte auch - anstelle von Flanschen und Schrauben - mittels eines Schnellverschlusses oder durch Schweissen erfolgen.

Das Herstellen eines metallischen Faltenbalgs nach der Erfindung erfolgt in üblicher bekannter Weise, z.B. indem zwei oder mehrere Blechrohre ineinander gesteckt und axial zusammengedrückt werden, also ein Blechrohr für jede Wand. Das Zusammendrücken kann mit oder ohne Hilfe einer besonderen Führung oder Lehre geschehen, wobei entsprechend den jeweiligen Materialeigenschaften, den Dimensionen des Faltenbalgs und seiner Form das Herstellungsverfahren angepasst werden muss. Insbesondere kann die plastische Verformung der Rohre in einem Schritt oder in mehreren Schritten ausgeführt werden. Beim erfindungsgemässen Faltenbalg bestehen dann die den durchlöcherten Wänden entsprechenden Rohre aus gelochtem Blech.

## Ansprüche

1.  Als Kompensator wirkender, rohrförmiger Faltenbalg aus mindestens zwei aneinander liegenden Schichten, von denen die innere eine einzige gasdichte Wand bildet und die andere sich über mindestens einen Teil der Länge der inneren Wand erstreckende Schicht, über ihre axiale und ihre umfangsmässige Erstreckung verteilt, Durchbrechungen aufweist, dadurch gekennzeichnet, dass die innere Wand aus Metallblech besteht und die andere Schicht ebenfalls eine aus Metallblech bestehende Wand bildet.

2.  Faltenbalg nach Anspruch 1, dadurch gekennzeichnet, dass die Durchbrechungen eckige Umrisse aufweisen und der jeweils einen Umriss umschreibende Kreis einen Durchmesser von mindestens zweimal die Dicke der durchbrochenen Wand aufweist.

3.  Faltenbalg nach Anspruch 1 oder 2, dadurch gekennzeichnet, dass die Wände gleich dick sind.

4.  Faltenbalg nach einem der Ansprüche 1 bis 3, dadurch gekennzeichnet, dass sein Querschnitt kreisförmig ist.

## Claims

1.  A tubular bellows operative as a compensator and consisting of at least two adjacent layers, the inner layer forming a single gas-tight wall and the other layer, which extends over at least a part of the length of the inner wall, being formed with perforations distributed axially and peripherally, characterised in that the inner wall consists of sheet metal and the other layer also forms a wall consisting of sheet metal.

2.  A bellows according to claim 1, characterised in that the perforations have angular contours and the circle circumscribing each contour has a diameter equal to at least twice the thickness of the perforate wall.

3.  A bellows according to claim 1 or 2, characterised in that the walls are of equal thickness.

4.  A bellows according to any of claims 1 to 3, characterised in that its cross-section is circular.

## Revendications

1.  Soufflet tubulaire à effet compensateur constitué d'au moins deux couches appliquées l'une contre l'autre, dont la couche intérieure forme une unique paroi étanche au gaz et l'autre couche s'étendant sur au moins une partie de la longueur de la paroi intérieure présente des perforations réparties sur son étendue axiale et son étendue périphérique, caractérisé en ce que la paroi intérieure est constituée d'une tôle métallique et l'autre couche forme également une paroi constituée d'une tôle métallique.

2. Soufflet suivant la revendication 1, caractérisé en ce que les perforations présentent des contours anguleux et le cercle circonscrit à chaque contour présente un diamètre qui est égal au moins au double de l'épaisseur de la paroi perforée.

3. Soufflet suivant la revendication 1 ou 2, caractérisé en ce que les parois sont de même épaisseur.

4. Soufflet suivant l'une des revendications 1 a 3, caractérisé en ce que sa section transversale est circulaire.

Fig. 1

Fig. 2

Fig. 3